# EUROPÄISCHE PATENTSCHRIFT

(11) **EP 2 375 174 B1**
(45) Veröffentlichungstag und Bekanntmachung des Hinweises auf die Patenterteilung: **08.06.2016**
(21) Anmeldenummer: 11161464.0
(22) Anmeldetag: 07.04.2011
(51) Int. Cl.: F24D 3/18, F24D 19/10, F24H 4/04

(54) **Wärmepumpenanlage und Verfahren zur Regelung einer Wärmepumpenanlage**
Heat pump assembly and method for controlling same
Installation de pompe à chaleur et procédé destiné au réglage d'une installation de pompe à chaleur

(30) Priorität: 07.04.2010 DE 102010016344
(43) Veröffentlichungstag der Anmeldung: 12.10.2011
(73) Patentinhaber: Wolf GmbH, 84048 Mainburg (DE)
(72) Erfinder: Rammelsberger, Thomas, 93197 Zeitlarn (DE); Schimke, Patrick, 33330 Gütersloh (DE); Hummel, Johann, 93149 Nittenau (DE)
(74) Vertreter: Popp, Eugen

(56) Entgegenhaltungen:
- WO-A1-2009/107261
- DE-A1- 10 025 519
- DE-A1-102008 004 126
- JP-A- 2007 327 725
- US-A1- 2009 319 087

## Beschreibung

Die Erfindung betrifft eine Wärmepumpenanlage zum Heizen oder Kühlen eines Mediums gemäß dem Oberbegriff des Anspruchs 1 sowie ein Verfahren zur Regelung einer Wärmepumpenanlage gemäß dem Oberbegriff des Anspruchs 10.

US 2009/0319087 A1 beschreibt eine Drehzahlregelung in einer Klimaanlage. Zur Berechnung der Drehzahl kann auf Sensoren zurückgegriffen werden, über die Temperaturwerte ermittelt werden können. JP 2007 327725 beschreibt eine Lösung, bei der Temperaturwerte des Brauchwassers als Berechnungsgrundlage der Brauchwasserszirkulation dienen, um damit die Drehzahl der Zirkulationspumpe zu steuern. DE 100 25 519 A1 beschreibt die Messung einer Vorlauf- und einer Rücklauftemperatur, um daraus eine momentane Leistungszahl zu berechnen. DE 10 2008 004 126 A1 beschreibt Temperaturwerte als Information für die Regelung eines Wärmeverteilungssystems. Zuletzt wird hinsichtlich des Standes der Technik noch auf die WO 2009/107261 A1 verwiesen, in der ein Steuerungsverfahren bei dem die Rotationsgeschwindigkeit der Brauchwasserpumpe durch Messen der Umgebungstemperatur bzw. der Brauchwasserücklauftemperatur bestimmt wird.

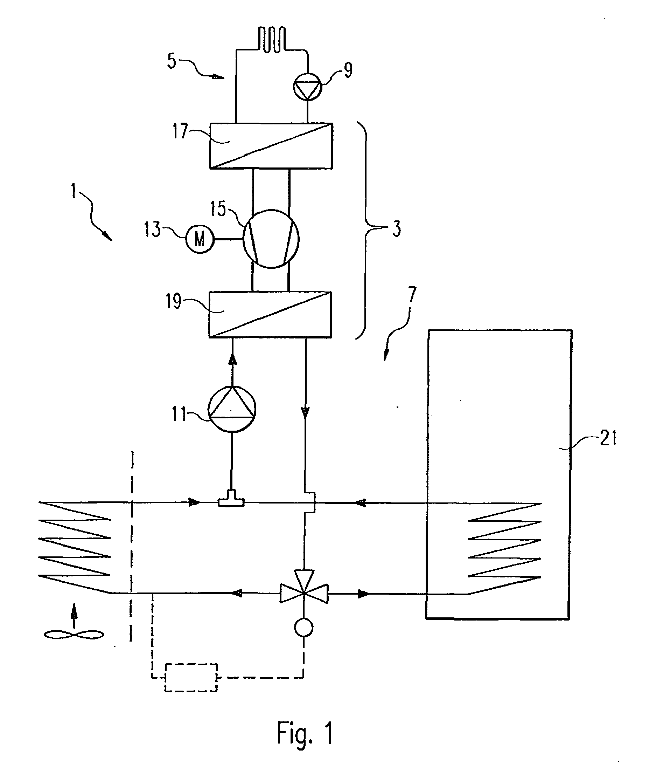

Wärmepumpenanlagen der hier angesprochenen Art sind weiterhin beispielsweise aus der DE 102 53 650 B3 bekannt. Fig. 1 zeigt eine derartige bekannte Wärmepumpenanlage 1. Sie umfasst eine Wärmepumpe 3, eine Wärmequelle 5, wenigstens eine Wärmesenke 7, im Folgenden auch Heizkreis genannt, sowie quellenseitig und senkenseitig angeordnete Umwälzpumpen 9 und 11. Die Wärmepumpe 3 wird auch Kältemittelkreislauf genannt und umfasst einen mittels eines Motors 13 angetriebenen Verdichter 15, einen ersten Wärmetauscher 17, der einen Verdampfer bildet und einen zweiten Wärmetauscher 19, der einen Verflüssiger bildet sowie ein hier nicht dargestelltes Expansionsventil. Weiterhin ist ein Wasserspeicher 21 für die Brauchwasserbereitung vorgesehen. Die Wärmepumpenanlage 1 kann zur Erwärmung und/oder Kühlung von Heizkreisläufen und/oder von Brauchwasserkreisläufen von Gebäuden dienen. Durch eine Wärmepumpe wird in der Regel Wärme von einem niedrigeren Temperaturniveau auf ein höheres Temperaturniveau angehoben. Bei der in Fig. 1 dargestellten häufigsten Bauart einer Wärmepumpe, der so genannten Kompressionswärmepumpe, durchläuft ein leicht verdampfbares Kältemittel in der Wärmepumpe 3 einen Kühlmittelkreislauf, wobei es seinen Aggregatszustand zwischen gasförmig und flüssig stets ändert. Der Kreislauf umfasst den Verdampfer 17, in dem das Kältemittel bei tiefem Druck verdampft und dabei Energie aus einer Wärmequelle 5 aufnimmt, wobei es sich bei der Wärmequelle um Außenluft, um Wasser und/oder ein Frostschutzmittel (Sole) handeln kann. In der Fig. 1 ist rein beispielhaft eine Sole/Wasser-Wärmepumpe dargestellt, in der eine in einer im Boden verlegten Leitung zirkulierende Sole als Wärmequelle 5 dient. Ein geeigneter Kompressor oder Verdichter 15 komprimiert das dampfförmige Kältemittel auf hohen Druck, wobei sich das Kältemittel auf eine hohe Temperatur erwärmt. Für die Kompression benötigt der Kompressor 15 elektrische Energie, die üblicherweise durch den Motor 13 bereitgestellt wird. Der Kreislauf weist auch den Verflüssiger 19 auf, in dem das Kältemittel wieder kondensiert und dabei seine Energie über einen Wärmetauscher an ein in einem Heizkreis, vorliegend allgemein Wärmesenke 7 genannt, befindliches Heizungswasser und/oder Brauchwasser abgibt. Schließlich wird das Kältemittel in dem Expansionsventil auf einen geringen Ausgangsdruck entspannt, wodurch es sich wieder abkühlt und erneut dem Verdampfer 17 zugeführt wird, wo der Kreislauf von vorne beginnt.

Wärmepumpen der oben angesprochenen Art können im reversiblen Betrieb gefahren werden und können somit eine Kühlung statt eine Erwärmung bewirken. Je nach Einsatzzweck, d.h. je nach dem, ob eine Kühlung oder eine Heizung eines Mediums erfolgen soll, spricht man auch von Kältemaschinen oder von Wärmepumpenheizungen. Unter dem Begriff "Wärmepumpenanlage" sollen im Folgenden Anlagen verstanden werden, die kühlen und/oder heizen können.

Der eigentlichen Wärmepumpe 3 ist also ein Heizkreis 7 nachgeschaltet und ein Wärmequellenkreis 5, insbesondere ein Solekreis vorgeschaltet, die jeweils eine Umwälzpumpe 9 bzw. 11 zur Förderung des Fluids in dem jeweiligen Kreislauf umfassen, wobei die quellenseitig angeordnete Umwälzpumpe 9 im Folgenden auch Solekreispumpe und die senkenseitig angeordnete Umwälzpumpe 11, im Folgenden auch Heizkreispumpe genannt wird. Bei den Umwälzpumpen 9 und 11 handelt es sich vorzugsweise um hocheffiziente elektronisch kommutierte EC-Pumpen (EC = Electronical Commutation), die höhere Wirkungsgrade als herkömmliche AC-Pumpen erreichen. Die quellenseitig und/oder senkenseitig angeordneten Umwälzpumpen werden im Stand der Technik mit einer Konstantregelung eingesetzt, d.h. die Umwälzpumpen fördern im Heizkreis und/oder im Solekreis einen konstanten Durchfluss.

Durch einen konstanten Durchfluss im Heizkreis und/oder im Solekreis ergeben sich jedoch einige Probleme. Wenn sich im Heizkreis der Durchfluss ändert, beispielsweise durch die Betätigung eines Thermostatventils eines Heizkörpers, ändert sich gleichzeitig die Temperaturspreizung der Wärmepumpe, wodurch die Anlage weniger effizient arbeitet. Unter der Temperaturspreizung der Wärmepumpe ist die Differenz zwischen der Vorlauftemperatur und der Rücklauftemperatur zu verstehen, wobei die Vorlauftemperatur die Temperatur des Wassers im Heizkreis am Ausgang des Verflüssigers 19 und die Rücklauftemperatur die Temperatur des Wassers im Heizkreislauf am Eingang des Verflüssigers 19 ist. Jede Wärmepumpe hat eine optimale Temperaturspreizung bezogen auf die mittlere Temperatur der Wärmepumpe. Ein zu hoher Durchfluss bewirkt eine erhöhte Leistungsaufnahme der Heizkreispumpe und damit einen Temperaturspreizung, die nicht mehr im optimalen Bereich der Wärmepumpe angesiedelt ist. Dies wirkt sich wiederum negativ auf die Leistungszahl COP der gesamten Anlage aus. Die Leistungszahl COP gibt die Effizienz einer Wärmepumpe an (COP = Coefficient of Performance). Insbesondere gibt sie das Verhältnis zwischen abgegebener Heizleistung und aufgenommener Leistung des Verdichters an. Je höher die Leistungszahl ist, desto besser arbeitet die Wärmepumpe und desto weniger hochwertige Energie muss zugeführt werden, um eine bestimmte Wärmemenge bereitzustellen.

Ein weiterer Nachteil einer Konstantregelung der Umwälzpumpen und damit eines konstanten Durchflusses im Heizkreis ist die wenig effiziente Speicherladung eines Wasserspeichers, da gegebenenfalls bei einem Umschalten von einem Heizbetrieb auf eine Brauchwasserbereitung der Speicher zuerst abgekühlt wird, bis genügend warmes Rücklaufwasser zur Wärmepumpe gelangt. Weiterhin ergibt sich bei einem konstanten Durchfluss im Heizkreis das Problem, dass es bei hohen Quellentemperaturen und geringen Senkentemperaturen (Übergangszeit) zu einem Abschalten des Verdichters und zu einem Aufheizen mit einem Zusatzwärmeerzeuger kommen kann, um den Kompressor vor zu geringen Druckverhältnissen zu schützen. Bei geringen Durchflüssen ergibt sich schließlich noch das Problem, dass während des Abtauens einer Luft-Wärmepumpe die Gefahr besteht, dass der Plattenwärmetauscher einfriert.

Außerdem läuft auch die Solekreispumpe oftmals nicht in einem optimalen Bereich. Dadurch wird bei einem zu geringem Durchfluss entweder der Verdampfungsdruck unnötig abgesenkt, was zu einem schlechten Wirkungsgrad des Verdichters führt, oder die Solekreispumpe nimmt bei einem zu großen Durchfluss unnötig viel Strom auf.

Aufgabe der vorliegenden Erfindung ist es daher, eine Wärmepumpenanlage und ein Verfahren zu deren Regelung bereitzustellen, welches die oben genannten Probleme vermeidet und welches eine hohe Effizienz, d.h. eine hohe Leistungszahl aufweist.

Zur Lösung dieser Aufgabe wird eine Wärmepumpenanlage mit den Merkmalen des Anspruchs 1 vorgeschlagen. Sie dient zum Heizen oder zum Kühlen eines Mediums und weist eine Wärmepumpe, eine Wärmequelle, wenigstens eine Wärmesenke und eine quellenseitig angeordnete und/oder eine senkenseitig angeordnete Umwälzpumpe auf. Die Wärmepumpenanlage zeichnet sich durch einen Regler aus, der zur Regelung einer der Wärmepumpenanlage auf einen vorbestimmten Nennwert ein Steuersignal zur Einstellung einer Drehzahl der jeweiligen Umwälzpumpe(n) ausgibt.

Durch die Regelung der Temperaturspreizung der Wärmepumpe auf einen definierten Nennwert lassen sich die oben genannten Probleme vermeiden. Insbesondere ergeben sich durch die erfindungsgemäße Wärmepumpenanlage eine höhere Gesamteffizienz der Anlage sowie ein sicherer Betrieb der Wärmepumpe auch bei geringen Druckverhältnissen des Kompressors und bei einem Abtauen des Verdampfers mittels eines Prozessumkehr-Verfahrens. Bei einem Prozessumkehr-Abtauverfahren wird der Kältekreislauf umgekehrt, so dass das verdichtete Heißgas nach dem Verdichter dem Verdampfer mit hohem Druck zugeführt wird, so dass das Heißgas im Verdampfer abkühlt und kondensiert. Hierdurch wird im Verdampfer Wärme freigesetzt, so dass der Verdampfer abtauen kann. Das verflüssigte Kältemittel kann dann in einem separaten Ventil, welches nur für die Abtauung verwendet wird, gedrosselt werden und fließt danach in den Kondensator bzw. den Verflüssiger. Dort wird das Kältemittel mit der Wärme vom Heizkreislauf verdampft und von dem Verdichter angesaugt und verdichtet.

Erfindungsgemäß kommt als Regelgröße durch ihren erheblichen Einfluss auf die Leistungszahl COP die eingangs beschriebene Temperaturspreizung in Betracht, die auf eine für die Wärmepumpe optimale Nenntemperaturspreizung geregelt wird. Hierfür muss an geeigneter Stelle der Wärmepumpenanlage, insbesondere im Heizkreis die Vorlauf- und die Rücklauftemperatur der Anlage gemessen werden. Weiterhin kann (was jedoch nicht beansprucht wird) als Regelgröße der Durchfluss im Heizkreis und/oder im Solekreis dienen, der dann auf einen für die Leistungszahl der Anlage optimalen Nenndurchfluss geregelt wird. Schließlich kann auch (was jedoch nicht beansprucht wird) vorgesehen sein, dass als Regelgröße die Vorlauftemperatur dient, welche dann auf eine optimale Nennvorlauftemperatur geregelt wird. Die optimal einzustellenden Nennwerte der einzelnen Regelgrößen sind so auszuwählen, dass eine Maximierung der Leistungszahl COP der Wärmepumpenanlage resultiert.

Besonders bevorzugt wird ein Regelverfahren einer Wärmepumpe, bei dem im Heizbetrieb die Temperaturspreizung so eingestellt wird, dass ein Optimum bzw. ein Maximum der Gesamtanlageneffizienz erzielt wird. Hierzu wird die Temperaturspreizung, d.h. die Temperaturdifferenz zwischen dem Wärmepumpenvorlauf und dem Wärmepumpenrücklauf dauerhaft bzw. permanent überwacht. Sollte die Temperaturspreizung nicht in einem optimalen Bereich liegen, gibt der Regler ein entsprechendes Signal zur Anpassung der Drehzahl der jeweiligen Umwälzpumpe auf eine optimale Drehzahl aus, wodurch sich der Durchfluss in dem Heizkreis oder in dem Solekreis so einstellt, dass die vorbestimmte optimale Nenntemperaturspreizung resultiert und die Leistungszahl maximiert wird. Die Anpassung der Drehzahl der Umwälzpumpen kann mittels einer Pulsweitenmodulation (PWM) oder einem 0-10V-Signal bewirkt werden. Die Nenntemperaturspreizung beträgt vorzugsweise 5 K, insbesondere 4 K. Auf die oben beschriebene Weise stellt sich die Wärmepumpe automatisch auf die wechselnden anlagenseitigen Durchflüsse ein, also beispielsweise dann, wenn der Durchfluss im Heizkreislauf erhöht wird. Hierdurch wird die Wärmepumpenanlage immer in einem optimalen Leistungsbereich betrieben.

Dem Regler kann wie gesagt (was jedoch nicht beansprucht wird) die Vorlauf- und ggf. die Rücklauftemperatur der Wärmepumpenanordnung, insbesondere des Wassers im Heizkreis als Regelgröße zugeführt werden. Der vorbestimmte Nennwert ist in einem Ausführungsbeispiel nur die Nennvorlauftemperatur der Wärmepumpenanordnung. Es kann hierbei vorgesehen sein, dass bei Unterschreiten einer von der Temperatur der Wärmequelle abhängigen Mindestvorlauftemperatur der Regler die Vorlauftemperatur auf einen vorbestimmten Nennwert regelt, der von der Temperatur der Wärmequelle abhängt. Die Regelung der Vorlauftemperatur auf einen vorbestimmten Nennwert erfolgt dabei wieder gemäß der Erfindung mittels einer entsprechenden Einstellung der Drehzahl der Solekreispumpe und/oder der Heizkreispumpe.

Dem Regler kann wie gesagt (was jedoch nicht beansprucht wird) auch ein Durchfluss in der wenigstens einen Wärmesenke und/oder in der Wärmequelle als Regelgröße zugeführt werden. Der vorbestimmte Nennwert ist dann ein Nenndurchfluss in der wenigstens einen Wärmesenke und/oder in der Wärmequelle.

Wie in der Fig. 1 gezeigt ist, kann auch eine Wasserspeichereinrichtung 21 vorgesehen sein, deren Speicherladungstemperatur durch die erfindungsgemäße Wärmepumpenanlage ebenfalls optimiert werden kann.

Besonders bevorzugt bewirkt der Regler eine optimale Speicherladung eines Wasserspeichers dadurch, dass sich die Vorlauftemperatur auf einen Sollwert einstellt, indem der Regler die Vorlauftemperatur auf einen Nennwert regelt, der sich aus der Sollvorlauftemperatur plus einer Überhöhung, d.h. eines Temperaturüberschusses ergibt.

Weiterhin kann vorgesehen sein (was jedoch nicht beansprucht wird), dass bei einem Unterschreiten einer von der Quellentemperatur abhängigen Mindestvorlauftemperatur, die Vorlauftemperatur durch die Einstellung der Drehzahl der Umwälzpumpe(n) auf einen von der Quellentemperatur abhängigen Nennwert geregelt wird.

Darüber hinaus kann vorgesehen sein, dass im Abtaubetrieb zum Abtauen des Verdampfers ein Frostschutz durch eine volle, d.h. durchgehende Ansteuerung der Heizkreisumwälzpumpe während des Abtaubetriebs gewährleistet wird.

Besonders vorteilhaft ist es, wenn eine Regelung der Solekreispumpe auf eine Drehzahl derart erfolgt, dass sich eine Nenntemperaturspreizung von 4 K einstellt. Zumindest soll jedoch ein Abgleich der Temperaturspreizung der Wärmepumpenanlage bei der Inbetriebnahme über ein bauseitiges Messen der Temperaturspreizung erfolgen und die Solekreispumpe dann auf die optimale Drehzahl eingestellt werden.

Zur Lösung dieser Aufgabe wird auch ein Verfahren zur Regelung einer Wärmepumpenanlage mit den Merkmalen des Anspruchs 5 vorgeschlagen. Hinsichtlich der vorteile des erfindungsgemäßen Verfahrens wird auf die obigen Ausführungen hinsichtlich der Wärmepumpenanlage verwiesen.

Die Erfindung wird im Folgenden anhand der Zeichnung näher erläutert. Es zeigen:
- Fig. 2: ein Schaubild einer Regelung der Temperaturspreizung einer Wärmepumpe;
- Fig. 3: ein Schaubild einer Speicherladungsregelung, und
- Fig. 4: eine Regelung für einen Verdichterschutz.

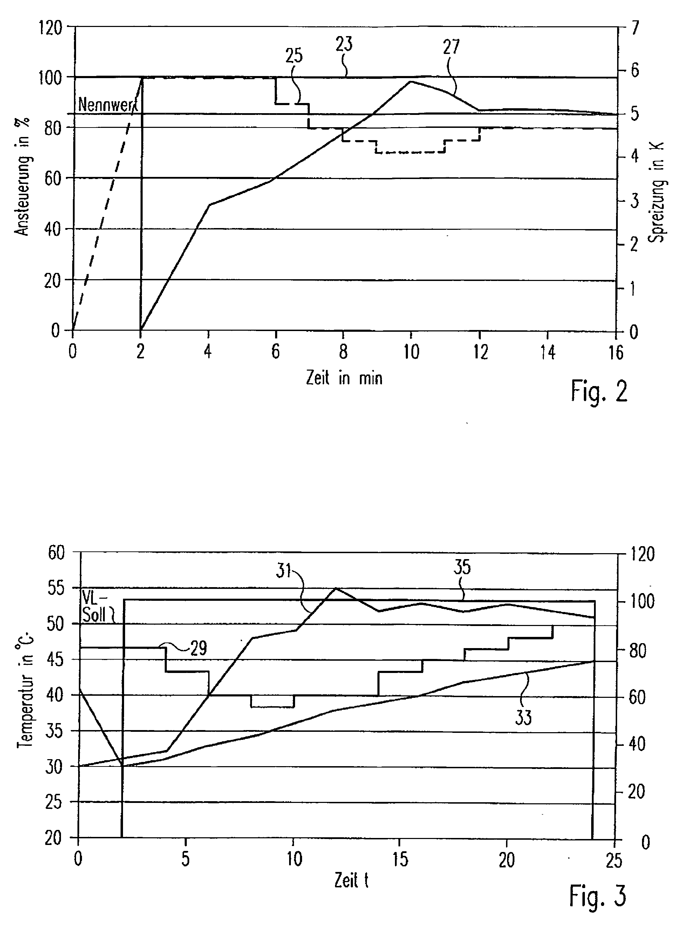

Fig. 2 zeigt ein Schaubild, welches den Zusammenhang zwischen der Ansteuerung der Heizkreispumpe in % und der Temperaturspreizung in Kelvin (K) über der Zeit t verdeutlicht. Eine hundertprozentige Ansteuerung der Heizkreispumpe entspricht dabei der maximal einstellbaren Drehzahl. Als Ansteuerverfahren für die Umwälzpumpen kommt jedes geeignete Verfahren in Betracht. In der Fig. 2 ist eine Ansteuerung beispielhaft mittels einer Pulsweitenmodulation (PWM) dargestellt.

Die gemäß Fig. 2 einzustellende Nenntemperaturspreizung von 5 K ist in diesem Ausführungsbeispiel die optimale Temperaturspreizung, um eine maximale Leistungszahl der Wärmepumpenanlage zu erzielen. Die Nenntemperaturspreizung soll auch bei sich ändernden Durchflüssen im Heizkreislauf erhalten bleiben, beispielsweise wenn das Thermostatventil eines Heizkörpers geöffnet wird.

Die Ansteuerung des Verdichters 15 bleibt von dieser Regelung unberührt, gemäß Fig. 2 also auf 100%, wie durch die Kurve mit der Bezugsziffer 23 deutlich wird.

Der Verlauf der Ansteuerungskurve 25 der Heizkreispumpe 11 und damit die Drehzahl der Pumpe verläuft hingegen derart, dass sich die Temperaturspreizungskurve 27 auf die vorbestimmte Nenntemperaturspreizung einstellt. Dabei wird noch deutlich, dass bei einer Reduzierung der Drehzahl eine größere Temperaturspreizung resultiert.

Fig. 3 zeigt eine geeignete Regelung der Regelgröße Vorlauftemperatur, wenn eine Speicherladung in einem im Heizkreis vorgesehenen Wasserspeicher 21 auf eine gewünschte Warmwassertemperatur erwärmt werden soll. Fig. 3 zeigt die Temperatur des im Speicher befindlichen Wassers in °C über der Zeit t. Die Linie VL-Soll gibt die Nenn- bzw. die Solltemperatur des Warmwassers an. Die Kurve 29 zeigt den Verlauf der Ansteuerung der Heizkreispumpe, die Kurve 31 zeigt den Verlauf der Vorlauftemperatur, die Kurve 33 zeigt den Verlauf der Ist-Temperatur der im Wasserspeicher befindlichen Speicherladung und die Kurve 35 veranschaulicht den gewünschten Warmwassersollwert, der um einige Grad Celsius höher ist als die Sollvorgabe der Vorlauftemperatur.

Es wird deutlich, dass ein gewünschter Sollwert VL-Soll der Vorlauftemperatur vorgesehen ist, auf den sich die Vorlauftemperatur durch eine entsprechende Einstellung der Drehzahl der Heizkreispumpe mittels PWM nach einiger Zeit einstellt. Entsprechend nähert sich auch die Ist-Temperatur des in dem Speicher befindlichen Warmwassers auf einen gewünschten Warmwassersollwert, der sich aus dem Vorlauftemperatursollwert plus einer Temperaturerhöhung von einigen Grad Celsius ergibt.

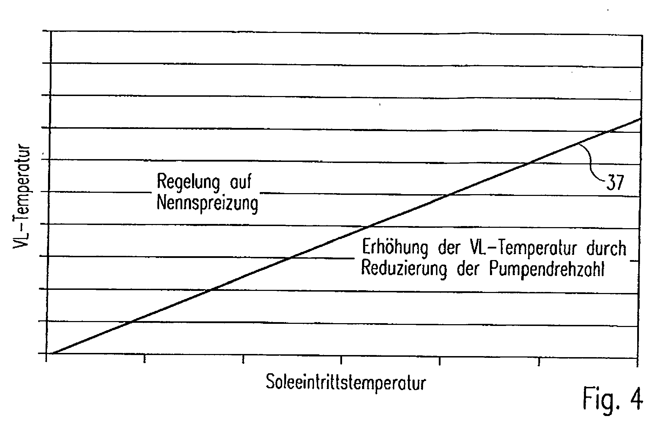

Fig. 4 zeigt schließlich eine geeignete Regelung einer Solekreisumwälzpumpe der Wärmpumpenanlage zum Schutz des Verdichters. Die Figur zeigt den Verlauf der Vorlauftemperatur über der Soleeintrittstemperatur.

Die Figur macht deutlich, dass bei Überschreiten einer von der Quellentemperatur, d.h. von der Soletemperatur abhängigen Mindestvorlauftemperatur die Drehzahl der Solekreispumpe so eingestellt wird, dass die Temperaturspreizung der Wärmepumpe auf einen vorbestimmten Nennwert geregelt wird. Falls die Vorlauftemperatur die Mindestvorlauftemperatur unterschreitet, erfolgt eine Erhöhung der Vorlauftemperatur durch eine Reduzierung der Solekreispumpendrehzahl. Die Kurve 37 gibt also die zu einer bestimmten Soletemperatur zugehörige Mindestvorlauftemperatur wieder.

### Bezugszeichenliste:

- 1: Wärmepumpenanlage
- 3: Wärmepumpe
- 5: Wärmequelle
- 7: Wärmesenke
- 9: Umwälzpumpe
- 11: Umwälzpumpe
- 13: Motor
- 15: Verdichter
- 17: Wärmetauscher
- 19: Wärmetauscher
- 21: Wasserspeicher
- 23: Ansteuerkurve Verdichter
- 25: Ansteuerkurve Heizkreispumpe
- 27: Temperaturspreizungskurve
- 29: Ansteuerkurve Heizkreispumpe
- 31: Verlauf der Vorlauftemperatur
- 33: Verlauf der Speicherladung Ist-Temperatur
- 35: Warmwassersollwert

## Patentansprüche

1. Wärmepumpenanlage (1) zum Heizen oder Kühlen eines Mediums, mit einer Wärmepumpe (3), einer Wärmequelle (5), wenigstens einer Wärmesenke (7), und wenigstens einer quellenseitig angeordneten und/oder einer senkenseitig angeordneten Umwälzpumpe (9, 11), **gekennzeichnet durch** einen Regler, der zur Regelung einer Temperaturspreizung der Wärmepumpenanlage (1) auf eine vorbestimmte Nenntemperaturspreizung ein Steuersignal zur Einstellung einer Drehzahl der jeweiligen Umwälzpumpe(n) (9, 11) ausgibt.

2. Wärmepumpenanlage nach Anspruch 1, **dadurch gekennzeichnet, dass** die einzustellende Nenntemperaturspreizung 5K, insbesondere 4K beträgt.

3. Wärmepumpenanlage nach einem der vorhergehenden Ansprüche, **dadurch gekennzeichnet, dass** bei Unterschreiten einer von der Temperatur der Wärmequelle (5) abhängigen Mindestvorlauftemperatur der Regler die Vorlauftemperatur auf einen vorbestimmten Nennwert regelt, der von der Temperatur der Wärmequelle (5) abhängt.

4. Wärmepumpenanlage nach einem der vorhergehenden Ansprüche, **dadurch gekennzeichnet, dass** eine Wasserspeichereinrichtung (21) vorgesehen ist.

5. Verfahren zur Regelung einer Wärmepumpenanlage (1), die eine Wärmepumpe (3), eine Wärmequelle (5), wenigstens eine Wärmesenke (7) und eine quellenseitig angeordnete und/oder eine senkenseitig angeordnete Umwälzpumpe (9, 11) aufweist,
**dadurch gekennzeichnet, dass**
eine Regelung einer Temperaturspreizung der Wärmepumpenanlage (1) auf eine Nenntemperaturspreizung mittels einer Einstellung der Drehzahl der jeweiligen Umwälzpumpe(n) (9, 11) erfolgt.

## Claims

1. Heat pump assembly (1) for heating or cooling a medium, including a heat pump (3), a heat source (5), at least one heat sink (7), and at least one circulating pump (9, 11) arranged on the source side and/or arranged on the sink side, **characterized by** a regulator which outputs a control signal for setting a rotational speed of the respective circulating pump(s) (9, 11) for regulating a temperature spread of the heat pump assembly (1) to a predetermined nominal temperature spread.

2. Heat pump assembly according to claim 1, **characterized in that** the nominal temperature spread to be set is 5K, optionally 4K.

3. Heat pump assembly according to any one of the preceding claims, **characterized in that**, upon falling below a minimum flow temperature depending on the heat source's (5) temperature, the regulator regulates the flow temperature to a nominal value which depends on the heat source's (5) temperature.

4. Heat pump assembly according to any one of the preceding claims, **characterized in that** a water storage means (21) is provided.

5. Method for regulating a heat pump assembly (1) which includes a heat pump (3), a heat source (5), at least one heat sink (7), and at least one circulating pump (9, 11) arranged on the source side and/or arranged on the sink side, **characterized in that**
regulating of a temperature spread of the heat pump assembly (1) to a nominal temperature spread is performed by setting the rotational number of the respective circulating pump(s) (9, 11).

## Revendications

1. Installation de pompe à chaleur (1) destinée à chauffer ou refroidir un médium, comprenant une pompe à chaleur (3), une source de chaleur (5), au moins un dissipateur de chaleur (7), et au moins une pompe de circulation (9, 11) qui est disposée côté source et/ou une qui est disposée côté dissipateur, **caractérisée par** un régulateur qui, pour la régulation d'un étalement de température de l'installation de pompe à chaleur (1) à un étalement de température nominal prédéterminé, émet un signal de commande destiné au réglage d'une vitesse de rotation de la (des) pompe(s) de circulation (9, 11) respective(s).

2. Installation de pompe à chaleur selon la revendication 1, **caractérisée en ce que** l'étalement de température nominal à régler est de 5K, en particulier de 4K.

3. Installation de pompe à chaleur selon l'une des revendications précédentes, **caractérisée en ce que**, en cas de franchissement vers le bas d'une température d'arrivée minimale dépendant de la température de la source de chaleur (5), le régulateur régule la température d'arrivée à une valeur nominale prédéterminée qui dépend de la température de la source de chaleur (5).

4. Installation de pompe à chaleur selon l'une des revendications précédentes, **caractérisée en ce qu'**un dispositif de réservoir d'eau (21) est prévu.

5. Procédé destiné à la régulation d'une installation de pompe à chaleur (1) qui présente une pompe à chaleur (3), une source de chaleur (5), au moins un dissipateur de chaleur (7) et une pompe de circulation (9, 11) qui est disposée côté source et/ou une qui est disposée côté dissipateur,
**caractérisé en ce que**
une régulation d'un étalement de température de l'installation de pompe à chaleur (1) à un étalement de température nominal est effectuée moyennant un réglage de la vitesse de rotation de la (des) pompe(s) de circulation (9, 11) respective(s).
